# EUROPÄISCHE PATENTSCHRIFT

(11) **EP 1 707 653 B1**
(45) Veröffentlichungstag und Bekanntmachung des Hinweises auf die Patenterteilung: **16.06.2010**
(21) Anmeldenummer: 05007225.5
(22) Anmeldetag: 01.04.2005
(51) Int. Cl.: C23C 28/00

(54) **Schichtsystem**
Coating system
Système de revêtement

(43) Veröffentlichungstag der Anmeldung: 04.10.2006
(73) Patentinhaber: SIEMENS AKTIENGESELLSCHAFT, 80333 München (DE)
(72) Erfinder: Kaiser, Axel Dr., 41462 Neuss (DE); Schumann, Eckart Dr., 45468 Mülheim an der Ruhr (DE); Subramanian, Ramesh, 32765 Oviedo, FL (US)

(56) Entgegenhaltungen:
- EP-A- 0 848 077
- EP-A- 0 992 603
- EP-A- 1 319 730
- EP-A- 1 514 953
- US-A1- 2001 007 719
- US-A1- 2004 180 233
- US-B1- 6 365 281
- T.KATO: "TEM OBSERVATIONS OF GD2ZR2O7 FILMS FORMED BY THE ION-BEAM-ASSISTED DEPOSITION METHOD ON AN NI-BASED ALLOY" PHYSICA C, Bd. 392-396, 2003, Seiten 790-795, XP002356325

## Beschreibung

Die Erfindung betrifft ein Schichtsystem gemäß Anspruch 1.

Ein solches Schichtsystem weist ein Substrat mit einer Metalllegierung auf der Basis von Nickel, Kobalt oder Eisen auf.

Die EP 1 514 593 A1 offenbart ein Bauteil mit einer Wärmedämmschicht auf dessen Oberfläche sich eine Wärmedämmschicht auf einer Haftvermittlerschicht (MCrAlY-Legierung) befindet, wobei ein oberer Bereich der Wärmedämmschicht aus Nd₂Hf₂O₇ oder La₂Zr₂O₇ besteht.

Die US 2001/007719 A1 offenbart die Verwendung von Pyrochlor in der Struktur A₂B₂O₇ wobei A La oder Gd sein kann und B Zr oder Hf sein kann.

Die US 2004/180233 A1 offenbart eine MCrAlY-Haftvermittlerschicht mit 15 bis 35% Chrom, 7 bis 18% Aluminium, 0 bis 20% Rhenium, 24 bis 26% Kobalt, Yttryum und Rest Nickel.

Derartige Erzeugnisse dienen vor allem als Bauteil einer Gasturbine, insbesondere als Gasturbinenschaufeln oder Hitzeschilde. Die Bauteile sind einem Heißgasstrom von aggressiven Verbrennungsgasen ausgesetzt. Daher müssen sie hohen thermischen Belastungen Stand halten können. Des Weiteren ist es erforderlich, dass diese Bauteile oxidations-und korrosionsbeständig sind. Vor allem an bewegliche Bauteile, z. B. Gasturbinenschaufeln, aber auch an statische Bauteile sind fernerhin mechanische Anforderungen zu stellen. Die Leistung und der Wirkungsgrad einer Gasturbine, in der heißgasbelastbare Bauteile Verwendung finden, steigen mit zunehmender Betriebstemperatur. Um einen hohen Wirkungsgrad und eine hohe Leistung zu erzielen, werden durch die hohen Temperaturen besonders belastete Komponenten der Gasturbinen mit einem keramischen Werkstoff beschichtet. Dieser wirkt als Wärmedämmschicht zwischen dem Heißgasstrom und dem metallischen Substrat.

Vor dem aggressiven Heißgasstrom wird der metallische Grundkörper durch Beschichtungen geschützt. Dabei weisen moderne Bauteile zumeist mehrere Beschichtungen auf, die jeweils spezifische Aufgaben erfüllen. Es liegt somit ein Mehrschichtsystem vor.

Da Leistung und Wirkungsgrad von Gasturbinen mit zunehmender Betriebstemperatur steigen, wurde immer wieder versucht, durch Verbesserung des Beschichtungssystems eine höhere Leistungsfähigkeit von Gasturbinen zu erzielen.

Die EP 0 944 746 B1 offenbart die Verwendung von Pyrochloren als Wärmedämmschicht.

Jedoch sind für den Einsatz eines Materials als Wärmedämmschicht nicht nur gute wärmedämmende Eigenschaften notwendig, sondern auch eine gute Anbindung an das Substrat.

Die EP 0 992 603 A1 offenbart eine Wärmedämmschichtsystem aus Gadoliniumoxid und Zirkonoxid, das keine Pyrochlorstruktur aufweisen soll.

Es ist daher Aufgabe der Erfindung ein Schichtsystem aufzuzeigen, das gute wärmedämmende Eigenschaften sowie eine gute Anbindung an das Substrat und damit eine lange Lebensdauer des gesamten Schichtsystems aufweist.

Der Erfindung liegt die Erkenntnis zugrunde, dass das gesamte System als Einheit betrachtet werden muss und nicht einzelne Schichten oder einzelne Schichten untereinander isoliert von einander betrachtet und optimiert werden dürfen, um eine lange Lebensdauer zu erzielen.

Die Aufgabe wird gelöst durch ein Schichtsystem gemäß Anspruch 1.

In den Unteransprüchen sind weitere vorteilhafte Maßnahmen aufgeführt, die beliebig in vorteilhafter Art und Weise kombiniert werden können.

Es zeigen
- Figur 1: ein erfindungsgemäßes Schichtsystem,
- Figur 2: eine Turbinenschaufel,
- Figur 3: eine Gasturbine.

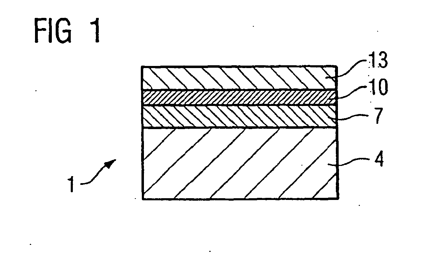

Figur 1 zeigt ein erfindungsgemäßes Schichtsystem 1.

Das Schichtsystem 1 besteht aus einem metallischen Substrat 4, das insbesondere für Bauteile bei hohen Temperaturen aus einer nickel- oder kobaltbasierten Superlegierung besteht.

Direkt auf dem Substrat 4 ist eine metallische Anbindungsschicht 7 vorhanden, die entweder aus 11 - 13wt% Kobalt, 20 - 22wt% Chrom, 10,5 - 11,5wt% Aluminium, 0,3 - 0,5wt% Yttrium, 1,5 - 2,5wt% Rhenium und Rest Nickel oder aus 24 - 26wt% Kobalt, 16 - 18wt% Chrom, 9,5 - 11wt% Aluminium, 0,3 - 0,5wt% Yttrium, 0,5 - 2wt% Rhenium und Rest Nickel besteht.

Auf dieser metallischen Anbindungsschicht 7 ist bereits vor dem Aufbringen weiterer keramischer Schichten eine Aluminiumoxidschicht entstanden oder während des Betriebs entsteht eine solche Aluminiumoxidschicht.

Auf der metallischen Anbindungsschicht 7 oder auf der Aluminiumoxidschicht (nicht dargestellt) ist eine vollständig oder teilweise stabilisierte Zirkonoxidschicht als innere keramische Schicht 10 vorhanden. Vorzugsweise wird Yttriumstabilisiertes Zirkonoxid verwendet. Ebenso kann Kalziumoxid, Ceroxid oder Hafniumoxid zur Stabilisierung von Zirkonoxid verwendet werden.

Das Zirkonoxid wird vorzugsweise als plasmagespritzte Schicht aufgetragen, kann jedoch auch als kolumnare Struktur mittels Elektronenstrahlverdampfen aufgebracht werden.

Auf der stabilisierten Zirkonoxidschicht 10 ist eine äußere keramische Schicht 13 aufgebracht, die zum größten Teil aus einer Pyrochlor-Phase besteht, also mindestens 80wt% der Pyrochlor-Phase aufweist und entweder aus Gd₂Hf₂O₇ oder Gd₂Zr₂O₇ besteht. Vorzugsweise besteht die äußere Schicht 13 zu 100wt% aus einer der beiden Pyrochlor-Phase.

Amorphe Phasen oder reines GdO₂ oder reines ZrO₂ bzw. reines HfO₂ sind dabei außer Acht gelassen. Mischphasen aus GdO₂ und ZrO₂ bzw. HfO₂, die nicht die Pyrochlor-Phase aufweisen sind unerwünscht und zu minimieren.

Das wesentliche der Erfindung ist die Erkenntnis, dass nicht nur die Wechselwirkung der äußeren keramischen Schicht 13 und einer inneren keramischen Schicht 10 miteinander optimiert wird, sondern dass auch die metallische Anbindungsschicht 7 einen wesentlichen Einfluss auf die Lebensdauer und Funktion der äußeren keramischen Schicht 13 dieser zweilagigen keramischen Struktur hat.

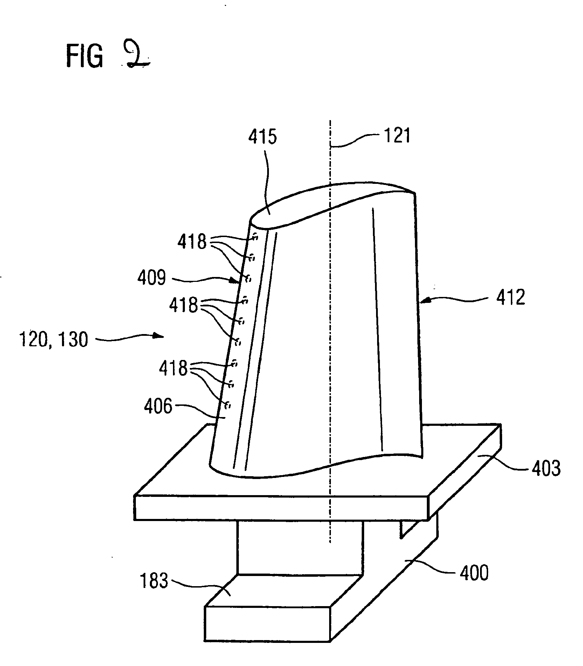

Figur 2 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt; diese Schriften sind Teil der Offenbarung.

Ebenso können die Schaufeln 120, 130 Beschichtungen gegen Korrosion oder Oxidation aufweisen, z. B. (MCrA1X; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrA1X kann noch eine Wärmedämmschicht vorhanden sein und besteht beispielsweise aus ZrO₂, Y₂O₄-ZrO₃, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions-und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

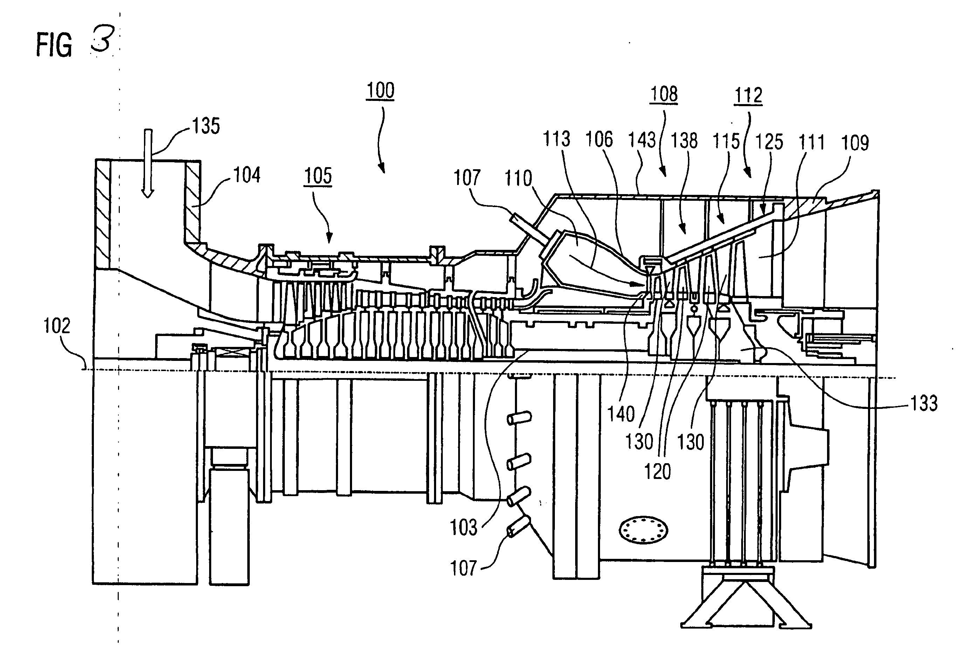

Die Figur 3 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird. Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Ebenso können die Schaufeln 120, 130 Beschichtungen gegen Korrosion (MCrA1X; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die bzgl. der chemischen Zusammensetzung Teil dieser Offenbarung sein sollen.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Schichtsystem
bestehend aus einem nickel- oder kobaltbasierten Substrat (4),
einer metallischen Anbindungsschicht (7),
die aus (in wt%)
24% - 26% Kobalt, insbesondere 25% Kobalt,
16% - 18% Chrom, insbesondere 17% Chrom,
9% - 11% Aluminium, insbesondere 10% Aluminium,
0,3% - 0,5% Yttrium, insbesondere 0.4% Yttrium
1% - 2% Rhenium, insbesondere und 1.5% Rhenium
Rest Nickel besteht,
einer stabilisierten Zirkonoxidschicht als innere keramische Schicht (10) auf der metallischen Anbindungsschicht (7),
auf der (10) eine äußere keramische Schicht (13) vorhanden ist,
die zumindest aus 80wt% aus dem Pyrochlor Gd₂Zr₂O₇ besteht.

2. Schichtsystem nach Anspruch 1,
**dadurch gekennzeichnet, dass**
das Gd₂Zr₂O₇ durch Gd₂Hf₂O₇ ersetzt ist.

3. Schichtsystem nach Anspruch 1,
**dadurch gekennzeichnet, dass**
die metallische Anbindungsschicht ersetzt ist durch eine metallische Anbindungsschicht (7) mit der Zusammensetzung (in wt%)
11% - 13% Kobalt, insbesondere 12% Kobalt,
20% - 22% Chrom, insbesondere 21% Chrom,
10,5% - 11,5% Aluminium, insbesondere 11% Aluminium
0,3% - 0,5% Yttrium, insbesondere 0.4% Yttrium,
1,5% - 2,5% Rhenium, insbesondere 2.0% Rhenium und
Rest Nickel.

4. Schichtsystem nach Anspruch 1,
**dadurch gekennzeichnet, dass**
die metallische Anbindungsschicht ersetzt ist durch eine metallische Anbindungsschicht (7) mit der Zusammensetzung (in wt%) :
29% - 31% Nickel, insbesondere 30% Nickel,
27% - 29% Chrom, insbesondere 28% Chrom,
7% - 9% Aluminium, insbesondere 8% Aluminium,
0,5% - 0,7% Yttrium, insbesondere 0,6% Yttrium,
0,6% - 0,8% Silizium, insbesondere 0,7% Silizium,
Rest Kobalt.

5. Schichtsystem nach Anspruch 1,
**dadurch gekennzeichnet, dass**
die metallische Anbindungsschicht ersetzt ist durch eine metallische Anbindungsschicht (7) mit der Zusammensetzung (in wt%) :
27% - 29% Nickel, insbesondere 28% Nickel,
23% - 25% Chrom, insbesondere 24% Chrom,
9% - 11% Aluminium, insbesondere 10% Aluminium,
0,5% - 0,7% Yttrium, insbesondere 0,6% Yttrium,
Rest Kobalt.

6. Schichtsystem nach Anspruch 1,
die eine Aluminiumoxidschicht (10) auf der metallischen Anbindungsschicht (7) aufweist.

7. Schicht nach Anspruch 1 oder 6,
bei dem die stabilisierte Zirkonoxidschicht plasmagespritzt ist.

8. Schichtsystem nach Anspruch 1 oder 6,
bei dem die Zirkonoxidschicht eine teilstabilisierte Zirkonoxidschicht ist.

9. Schichtsystem nach Anspruch 1 oder 6,
bei dem teilstabilisierte Zirkonoxid plasmagespritzt ist.

## Claims

1. Layer system
comprising a nickel-based or cobalt based substrate (4),
a metallic bonding layer (7),
which consists of (in wt%)
24% - 26% cobalt, in particular 25% cobalt,
16% - 18% chromium, in particular 17% chromium,
9% - 11% aluminum, in particular 10% aluminum
0.3% - 0.5% yttrium, in particular 0.4% yttrium,
1% - 2% rhenium, in particular 1.5% rhenium
remainder nickel,
a stabilized zirconium oxide layer as inner ceramic layer (10) on the metallic bonding layer (7),
on which (10) there is an outer ceramic layer (13),
which comprises at least 80wt% of the pyrochlore Gd₂Zr₂O₇.

2. Layer system according to Claim 1,
**characterized in that**
the Gd₂Zr₂O₇ is replaced by Gd₂Hf₂O₇.

3. Layer system according to Claim 1,
**characterized in that**
the metallic bonding layer is replaced by a metallic bonding layer (7) having the composition (in wt%)
11% - 13% cobalt, in particular 12% cobalt,
20% - 22% chromium, in particular 21% chromium,
10.5% - 11.5% aluminum, in particular 11% aluminum,
0.3% - 0.5% yttrium, in particular 0.4% yttrium,
1.5% - 2.5% rhenium, in particular 2.0% rhenium, and
remainder nickel.

4. Layer system according to Claim 1,
**characterized in that**
the metallic bonding layer is replaced by a metallic bonding layer (7) having the composition (in wt%):
29% - 31% nickel, in particular 30% nickel,
27% - 29% chromium, in particular 28% chromium,
7% - 9% aluminum, in particular 8% aluminum,
0.5% - 0.7% yttrium, in particular 0.6% yttrium,
0.6% - 0.8% silicon, in particular 0.7% silicon
remainder cobalt.

5. Layer system according to Claim 1,
**characterized in that**
the metallic bonding layer is replaced by a metallic bonding layer (7) having the composition (in wt%):
27% - 29% nickel, in particular 28% nickel
23% - 25% chromium, in particular 24% chromium,
9% - 11% aluminum, in particular 10% aluminum,
0.5% - 0.7% yttrium, in particular 0.6% yttrium,
remainder cobalt.

6. Layer system according to Claim 1,
which has an aluminum oxide layer (10) on the metallic bonding layer (7).

7. Layer according to Claim 1 or 6,
in which the stabilized zirconium oxide layer is plasma-sprayed.

8. Layer system according to Claim 1 or 6,
in which the zirconium oxide layer is a partially stabilized zirconium oxide layer.

9. Layer system according to Claim 1 or 6,
in which partially stabilized zirconium oxide is plasma-sprayed.

## Revendications

1. Système stratifié
constitué d'un substrat ( 4 ) à base de nickel ou de cobalt, d'une couche ( 7 ) métallique de liaison,
qui est constituée ( en % en poids )
de 24 % à 26 % de cobalt, notamment de 25 % de cobalt,
de 16 % à 18 % de chrome, notamment de 17 % de chrome,
de 9 % à 11 % d'aluminium, notamment de 12 % d'aluminium,
de 0,3 % à 0,5 % d'yttrium, notamment de 0,4 % d'yttrium,
de 1% à 2% de rhénium, notamment de 1,5 % de rhénium,
le reste étant du nickel,
une couche stabilisante de zirconium comme couche ( 10 ) intérieure en céramique sur la couche ( 7 ) métallique de liaison,
sur laquelle est présente une couche ( 13 ) extérieure en céramique,
qui est constituée pour au moins 80 % en poids du pyrochlore Gd2Zr2O7.

2. Système stratifié suivant la revendication 1,
**caractérisé en ce que**
le Gd2Zr2O7 est remplacé par du Gd2Hf2O7.

3. Système stratifié suivant la revendication 1,
**caractérisé en ce que**
la couche métallique de liaison est remplacée par une couche ( 7 ) métallique de liaison ayant la composition ( en % en poids )
de 11 % à 13 % de cobalt, notamment de 12 % de cobalt,
de 20 % à 22 % de chrome, notamment de 21 % de chrome,
de 10,5 % à 11,5 % d'aluminium, notamment de 11 % d'aluminium, de 0,3 % à 0,5 % d'yttrium, notamment de 0,4 % d'yttrium,
de 1,5% à 2,5% de rhénium, notamment de 2,0 % de rhénium et
le reste étant du nickel.

4. Système stratifié suivant la revendication 1,
**caractérisé en ce que**
la couche métallique de liaison est remplacée par une couche ( 7 ) métallique de liaison ayant la composition ( en % en poids ) :
de 29 % à 31 % de nickel, notamment de 30 % de nickel,
de 27 % à 29 % de chrome, notamment de 28 % de chrome
de 7 % à 9 % d'aluminium, notamment de 8 % d'aluminium,
de 0,5 % à 0,7 % d'yttrium, notamment de 0,6 % d'yttrium
de 0,6% à 0,8% de silicium, notamment de 0,7 % de silicium
le reste étant du cobalt.

5. Système stratifié suivant la revendication 1,
**caractérisé en ce que**
la couche métallique de liaison est remplacée par une couche ( 7 ) métallique de liaison ayant la composition ( en % en poids ) :
de 27 % à 29 % de nickel, notamment de 28 % de nickel,
de 23 % à 25 % de chrome, notamment de 24 % de chrome,
de 9 % à 11 % d'aluminium, notamment de 10 % d'aluminium,
de 0,5 % à 0,7 % d'yttrium, notamment de 0,6 % d'yttrium,
le reste étant du cobalt.

6. Système stratifié suivant la revendication 1,
qui a une couche ( 10 ) d'oxyde d'aluminium sur la couche ( 7 ) métallique de liaison.

7. Système stratifié suivant la revendication 1 ou 6,
dans lequel la couche stabilisée d'oxyde de zirconium est obtenu par projection au plasma.

8. Système stratifié suivant la revendication 1 ou 6,
dans lequel la couche d'oxyde de zirconium est une couche d'oxyde de zirconium stabilisé partiellement.

9. Système stratifié suivant la revendication 1 ou 6,
dans lequel l'oxyde de zirconium stabilisé partiellement est obtenu par projection de plasma.
